Europäisches Patentamt

European Patent Office

Office européen des brevets

(19)

(11) Veröffentlichungsnummer: **0 358 121**
**A2**

(12) **EUROPÄISCHE PATENTANMELDUNG**

(21) Anmeldenummer: 89116169.7

(51) Int. Cl.5: **E06B 7/02**

(22) Anmeldetag: 01.09.89

(30) Priorität: 03.09.88 DE 3829956

(43) Veröffentlichungstag der Anmeldung:
14.03.90 Patentblatt 90/11

(84) Benannte Vertragsstaaten:
AT BE CH DE ES FR GB GR IT LI LU NL SE

(71) Anmelder: **SCHEU + WIRTH AG**
**Lotterbergstrasse 16**
**D-7000 Stuttgart 31(DE)**

(72) Erfinder: **Barath, Bela, Dipl.-Ing.**
**Im Böxfeld 31**
**D-4040 Neuss/Rhein(DE)**
Erfinder: **Sander, Gerd, Dipl.-Ing.**
**Am unteren Schlossberg 61**
**D-7148 Neckarrems(DE)**

(74) Vertreter: **Raeck, Wilfrid, Dipl.-Ing.**
**Moserstrasse 8**
**D-7000 Stuttgart 1(DE)**

(54) **Luftführendes Fenster.**

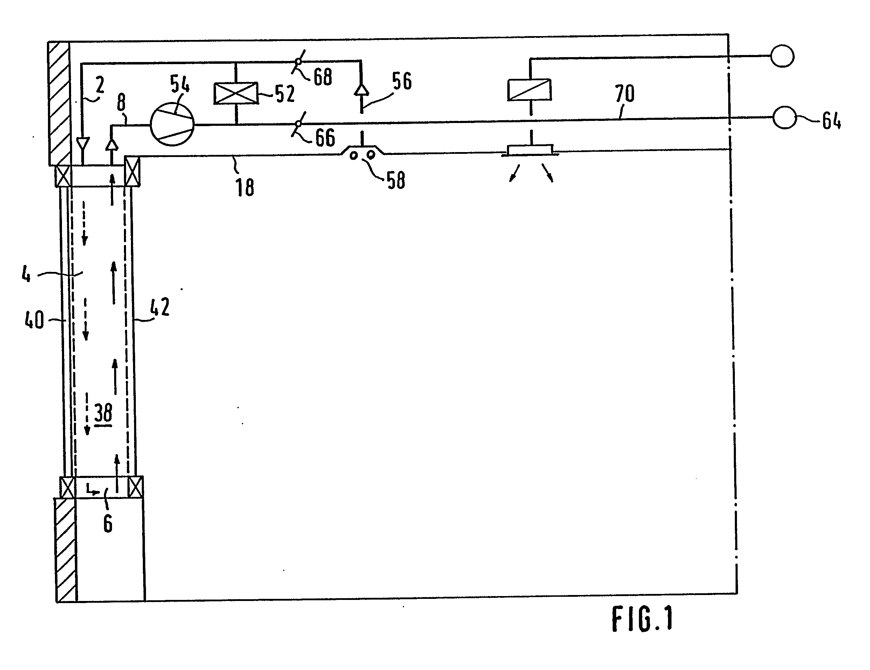

(57) Luftführungssystem mit einem gesonderten Kreislauf für einzelne Fenster oder Fassadenabschnitte, bei dem zwischen einer Außenscheibe (40) und einer Innenscheibe (42) ein Glaskanal (38) gebildet ist, der seitlich durch hohle Rahmenteile begrenzt und durch zum Glaskanal hin gerichtete Öffnungen von Rahmenteilen in das System einbezogen ist. Die Luftführung verläuft in einer Richtung durch den Glaskanal und in der entgegengesetzten Richtung durch wenigstens einen senkrechten Hohlprofilpfosten und umfaßt wenigstens einen Ventilator (54) sowie ein Kleinkühlgerät (52). In den im Sommer und Übergangsbetrieb in sich geschlossenen Kreislauf mündet ein mit dem Raum in Verbindung stehender Ansaugkanal (56), über den im Winterbetrieb warme Raumluft in den Kreislauf gelangt, die nach Durchströmen des Glaskanals über eine gemeinsam mit dem Ansaugkanal (56) öffnende Verbindung (70) zu einem zentralen Abluftkanalsystem (64) weggeführt wird (Fig. 1).

FIG.1

# Luftführendes Fenster

Die Erfindung betrifft ein luftführendes Fenster, mit einem zwischen einer Außenscheibe und einer Innenscheibe gebildeten Glaskanal, der seitlich vorzugsweise als Hohlprofil ausgeführte Rahmenteile (Pfosten, Holme, Zargen, Riegel) begrenzt und durch zum Glaskanal hin gerichtete Öffnungen der Rahmenteile mit in ein Luftführungssystem einbezogen ist.

Mit Hilfe bekannter Klimatisierungsverfahren ist es möglich, ein gleichmäßiges angenehmes Raumklima aufrecht zu erhalten, das von der Außenluft und Witterungseinflüssen weitgehend unabhängig bleibt.

Nach wie vor besteht jedoch beim Aufrechterhalten einer gleichbleibenden Behaglichkeit das Problem, daß die in der Regel ein unzureichendes Isolationsvermögen aufweisenden Fensterflächen mit dem Wechsel der Witterungen und Jahreszeiten relativ große variierende Einflußgrößen ausüben. Im Sommer leistet die Sonneneinstrahlung eine unerwünschte Aufheizung, während im Winter durch Strahlungskälte und Konvektion entstehende Zugerscheinungen ein im übrigen angenehmes Raumklima beeinträchtigen können.

Bei einem aus der DE-OS 25 29 932 bekannten luftführenden Fenster der eingangs bezeichneten Art wird verbrauchte Raumluft (Abluft) durch einen zwischen den Fensterscheiben gebildeten Glaskanal hindurchgeführt, wobei wenigstens ein Schenkel des Fensterrahmens aus einem mit luftdurchlässigen versehenen Hohlprofil besteht, über das eine Entlüftung vom Raum her übernimmt, die von dort durch den Glaskanal und schließlich durch einen Abluftkanal folgt. Mit einem solchen bekannten Abluftfenster ist zwar während der Übergangszeit oder im Winter eine Isolierwirkung nach außen möglich, jedoch reicht die durch den Glaskanal geführte Luft im Sommerbetrieb nicht aus, um die aus der Sonneneinstrahlung resultierende Wärmezufuhr in genügendem Maße abzuführen. Während im Winterbetrieb die durch den Glaskanal geführte Raumluft ihre Wärme im Sinne eines Isolationsmantels an die Innenscheibe abgibt, ist dies Abluftfenster andererseits weder in der Lage, bei Sonneneinstrahlung für eine nennenswerte Kühlung zu sorgen, noch unter anderen Bedingungen eine Wärmeabfuhr zu gewährleisten, wenn beispielsweise durch Maschinen, Beleuchtung und/oder größere Personenzahl im Raum eine erhöhte Kühllast besteht.

Andererseits ist ein z. B. aus der DE-OS 37 28 698 bekanntes sog. Klimafenster nur zur Kühlung im Sommer vorgesehen. Dabei wird von einer zentralen Luftversorgung aus ein einem zwischen den beiden Fensterscheiben und durch Umlenkung um einen dazwischen angeordneten Rollstore geschaffenen verlängerten Glaskanal z. B. eine Lufttemperatur von etwa 13 °C aufrechtzuerhalten, um so die Temperatur an der zum Raum weisenden Fensteroberfläche bei etwa 20 °C zu halten.

Da das bekannte Fenster lediglich die durch Sonneneinstrahlung entstehende Aufheizung zu vermeiden in der Lage ist, die übrige Raumklimatisierung aber davon unabhängig durchgeführt werden muß, ist von vornherein ein erheblicher investierter Aufwand erforderlich, der sich durch die Versorgungs- oder Betreibungskosten noch beträchtlich steigert. Als nachteilig ist bei dem bekannten Klimafenster außerdem die zentrale Aufbereitung der Kühlluft anzusehen, die zur Überwindung der langen Transportwege verhältnismäßig stark abgekühlt und auch zusätzlich entfeuchtet werden muß, um Transportschäden zu vermeiden. Folglich entstehen hohen Transportkosten aufgrund der notwendigen Isolationen in den Räumen und in den Schächten für die Luftführung.

Ein Klimafenster ist folglich nur im Sommer interessant, während in den Monaten mit kälterer Witterung die Kühlanlage abgestellt wird und die Klimafunktion des Fensters außer Betrieb ist.

Der Erfindung liegt die Aufgabe zugrunde, ein luftführendes Fenster zu schaffen, das mit verhältnismäßig geringen Herstellungs- und Unterhaltungskosten für einen ganzjährigen Betrieb geeignet und somit gleichzeitig alle Funktionen eines Klimafensters und auch eines Abluftfensters zu übernehmen in der Lage ist.

Bei einem luftführenden Fenster der eingangs bezeichneten Art wird diese Aufgabe dadurch gelöst, daß das Luftsführungssystem für jedes einzelne Fenster oder jeden Fassadenabschnitt einen gesonderten Kreislauf aufweist, der in einer Richtung durch den Glaskanal und in der entgegengesetzten Richtung durch wenigstens einen senkrechten Hohlprofilpfosten oder -holm verläuft und der wenigstens einen Ventilator sowie ein vorzugsweise regelbares Kleinkühlgerät enthält und im Sommer- und Übergangsbetrieb in sich geschlossen ist und in den ein mit dem Raum in Verbindung stehender steuerbarer Ansaugkanal mündet, über den im Winterbetrieb warme Raumluft in den Kreislauf gelangt, die nach Durchströmung des Glaskanals über eine gemeinsam mit dem Auslaßkanal öffnende Verbindung zu einem zentralen Abluftkanalsystem weggeführt wird.

Nach dem Grundgedanken der vorliegenden Erfindung entsteht mit dieser Kombination zwischen Abluft- und Klimafenster eine vom Einbau her keine besonderen Voraussetzungen erfordernde preisgünstige bauliche Einheit, die darüberhinaus für einen ganzjährigen Betrieb geeignet ist. Dazu trägt der für jede Fenstereinheit oder jeden Fassadenabschnitt geschlossene Kreislauf bei, durch den das Fenster im Sommerbetrieb als wirksame Kühlfläche dient, sodaß über die Fensterflächen Kühllasten aus dem Raum abgeführt werden können. Da das luftführende Fenster von einer zentralen Luftversorgung unabhängig ist, kann eine dennoch vorhandene zentrale Luftversorgung beschränkt werden auf die für die Zuführung der notwendigen Außenluftrate erforderliche Kapazität.

Dadurch läßt sich eine zentrale Anlage kostengünstig auf ein konstantes Volumen auslegen und mit diesen Werten betreiben; denn der größte Anteil der im Raum entstehenden variablen Kühllast wird über das Fenster direkt abgeführt.

Andererseits ist mit dem erfindungsgemäßen luftführenden Fenster und seiner dezentralen Versorgung eine passive Klimatisierung möglich, wenn die Zufuhr von Außenluft z. B. durch einen direkten Anschluß nach außen oder durch Öffnen des Fensters erfolgt. Ohne Verbindung zu anderen Räumen bleiben dann die hygienischen Verhältnisse im jeweiligen Raum unverändert bzw. unbeeinträchtigt von sonstigen Vorgängen. Dieses Merkmal ist von Bedeutung für den Einbau solcher Fenster in Krankenhäusern oder auch bei der Sanierung von Altgebäuden, so daß dort die Kosten für die Einrichtung einer aktiven Klimatisierung eingespart werden.

Nach Beendigung der aktiven Kühl- und Klimafunktion der das Fenster durchströmenden gekühlten Luft wird im Übergangs- oder im Winterbetrieb das im geschlossenen Kreislauf angeordnete Kühlgerät abgeschaltet und die in der Anlage befindliche Luft umgewälzt, um auf diese Weise unter allen Umständen eine Kondensatbildung an der Außenscheibe im Glaskanal zu vermeiden. Bei Umwälzung des Luftvolumens in der Anlage werden im übrigen die Motor- und Kompressionswärme ausgenutzt, so daß praktisch die gesamte Antriebsleistung in nutzbare Wärme umgesetzt wird, wobei gegebenenfalls ein zusätzliches z. B. elektrisches Heizregister mit eingesetzt werden kann.

Der Betrieb als Abluftfenster kann dann eingeschaltet werden, wenn bei kalter Witterung die bloße Umwälzung des Luftvolumens der Anlage nicht ausreicht, um eine für die Behaglichkeit im Raum noch zulässige maximale Differenz von 3°C zwischen der Scheibentemperatur an der Rauminnen Seite und Raumtemperatur nicht zu unterschreiten. In diesem Fall wird dann nach Raumluft angesaugt und als isolierendes Medium auf dem Weg zu einem zentralen Abluftsystem durch den Glaskanal geführt.

Anstelle einer erfahrungsgemäß relativ selten betätigten Sonnenschutzvorrichtung kann zur Bildung eines Zwangsführungskanals innerhalb des Kastenfensters oder dgl. eine zusätzliche feste Verglasung im Abstand von der Innenscheibe fest angebracht werden, wobei unterhalb des Glaskanals und des davon getrennten Zwangsführungskanals gesonderte Einlaßöffnungen, insbesondere im Fensterelement angeordnet sind, die unmittelbar oder auch mittelbar durch Absperrmittel wahlweise derart verschließbar sind, daß entweder Kühlluft in den Zwangsführungskanal gelangt oder Raumluft durch den im allgemeinen breiteren Glaskanal geführt wird. Damit entsteht eine Fensterkonstruktion, die wahlweise als Abluft- oder als Kühlfenster und in jedem Fall davon unabhängig wirksam ist, ob eine vorgesehene Sonnenschutzvorrichtung betätigt wird oder nicht. Bei betätigtem Sonnenschutz entsteht zwischen diesem und der zusätzlichen festen Innenscheibe eine ruhende, nahezu abgeschlossene Luftschicht, welche die von der einstrahlenden Sonne erzeugte Wärme abschirmt und gar nicht erst bis an den Zwangsführungskanal heranläßt. Andererseits kann der Sonnenschutz nunmehr an der Außenseite des Fensterelementes angeordnet werden.

Weitere Merkmale und Vorteile ergeben sich aus den Ansprüchen und aus der nachfolgenden Beschreibung von Ausführungsbeispielen gemäß der Erfindung anhand der Zeichnungen. Die Merkmale der Ansprüche können einzeln oder in beliebiger anderer Kombination weitere Ausführungen der Erfindung bilden.

Es zeigen jeweils schematisch,

Fig. 1 eine diagrammähnliche Übersicht über einen geschlossenen dezentralen Kreislauf für ein luftführendes Fenster nach der Erfindung im Bereich einer abgehängten Decke mit getrennter Anordnung einer gegebenenfalls für zusätzliche Klimatisierung ausgelegten zentralen Luftversorgung,

Fig. 2a, b und c einen Vertikal- bzw. Horizontalschnitt einer ersten Ausführungsform eines erfindungsgemäßen Fensters bzw. eine Ansicht der dort vorhandenen Luftführung,

Fig. 3a, b und c einen Vertikal- bzw. Horizontalschnitt durch eine Variante gemäß der Erfindung mit einem Rollstore im Glaskanal bzw. eine Ansicht der dazu gehörigen Luftführung,

Fig. 4a, b und c einen Vertikal- bzw. Horizontalschnitt einer anderen Variante ähnlich Fig. 3, bzw. eine Übersicht über die Luftführung.

Fig. 5a, b und c einen Vertikal- bzw. Horizontalschnitt eines Fensters gemäß der Erfindung mit waagerechter Luftführung bzw. eine Ansicht der Luftführung und

Fig. 6a, b und c einen Vertikal- bzw. Horizontalschnitt durch eine Ausführungsform gemäß der Erfindung, bei der sich Abschnitte des geschlossenen Kreislaufes im Bereich der Brüstung befinden, bzw. eine Ansicht der dazugehörenden Luftführung.

In der Übersicht gemäß Fig. 1 verläuft der autonome Kreislauf für ein luftführendes Fenster gemäß der Erfindung durch eine Leitung 2 im Anschluß an ein Kühlgerät 52 im Bereich der Fassade oder des Fensters nach unten, und zwar durch einen oder mehrere senkrechte Kanäle 4, die z. B. durch einen als Hohlprofil ausgeführten senkrechten Fensterpfosten realisiert sein können. Nach Austritt aus der Unterseite des senkrechten Kanals 4 wird die Luft mit beliebigen geeigneten Einrichtungen an der Stelle 6 über die Breite des Fensters verteilt, um von dort durch einen zwischen Außenscheibe 40 und Innenscheibe 42 des Fensters gebildeten Glaskanal 38 nach oben geführt zu werden. Im Anschluß an das obere Ende des Glaskanals wird die Luft gesammelt und in eine zum Ventilator 54 führende Leitung 5 eingesaugt, worauf sich der Kreislauf in Richtung zum Kühlgerät 52 schließt.

Solange das Kühlgerät 52 eingeschaltet ist, sind dadurch die Leitungen 2 und 8 in der Darstellung nach Fig. 1 gewissermaßen kurzgeschlossen. Bei Abschaltung des Kühlgerätes 52 bleibt dieser Kurzschlußweg offen, so daß das Luftvolumen der Anlage weiterhin im geschlossenen Kreislauf umgewälzt wird.

Durch Öffnen eines Klappenventils 66 in der Fortsetzung 70 der Leitung 8 wird eine Verbindung zum zentralen Abluftkanalsystem 64 geschaffen. Zweckmäßigerweise wird dabei gleichzeitig ein Klappenventil 68 in der Fortsetzung in der Fortsetzung der Leitung 2 geöffnet, die als Ansaugleitung wirksam ist, so daß mittels des Ventilators 54 nunmehr Raumluft, z. B. über die obere Abluftleuchte 58 angesaugt wird. Diese Raumabluft strömt im Betrieb als Abluftfenster durch den Glaskanal 38, kühlt dabei ab und wird an das Abluftkanalsystem 64 abgegeben.

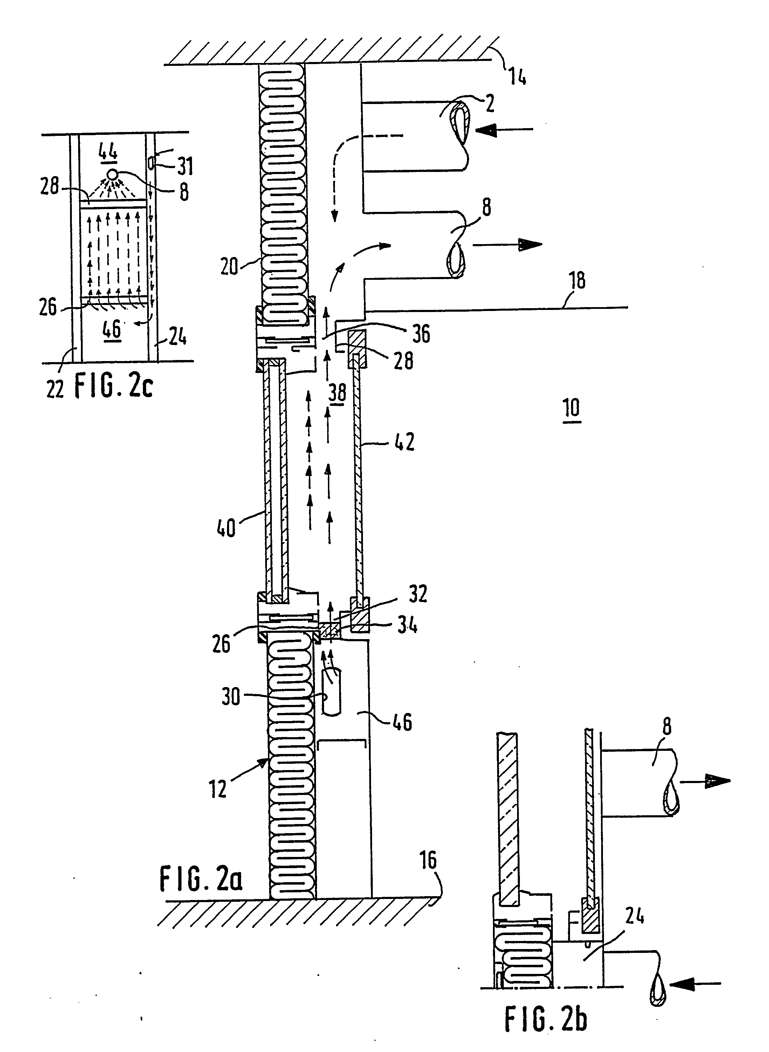

Im folgenden sind spezielle Ausführungsbeispiele des luftführenden Fensters gemäß der Erfindung anhand der detaillierten Darstellungen in Fig. 2 bis 6 beschrieben.

Gemäß Fig. 2a bis 2c ist ein Gebäuderaum 10 durch eine obere Betondecke 14, eine untere Betondecke 16, eine üblicherweise abgehängte Decke 18 und durch ein Fenster begrenzt, das im gezeigten schematischen Beispiel zwischen einer unteren Brüstung 12 und einem oberen Fassadenbereich 20 angeschlossen ist. Das in seinem Aufbau und in seinem Rahmenmaterial weitgehend beliebig gestaltete Fenster besitzt eine Außenscheibe 40, vorzugsweise in Isolierglasausführung und eine Innenscheibe 42, zwischen denen ein für die Luftführung ausreichend breiter bzw. tiefer Glaskanal 38 vorgesehen ist. Vorzugsweise wird die Luftströmung so geführt, daß sie den Glaskanal nahe der Innenscheibe 42 durchströmt, wie dies durch die schematisch dargestellten Luftpfeile wiedergegeben ist.

Wie auch in Fig. 2b und 2c erkennbar, ist das Fenster durch senkrechte Pfosten 22,24, vorzugsweise aus Hohlprofil seitlich begrenzt und durch waagerechte Riegel- oder Rahmenteile 26,28 nach unten und oben begrenzt. Unter Bezugnahme auf die Darstellung des Luftkreislaufes in Fig. 1 wird Luft von der Strömungsleitung 2 aus durch eine obere Öffnung 31 in den senkrechten Hohlprofilposten 24 eingeblasen und nach unten befördert, wo die Luft das Hohlprofil 24 über eine Austrittsöffnung 30 verläßt und in eine untere Verteilerkammer 46 eintritt. Diese Luftverteilerkammer kann aus einem zum Fenster gehörenden Profil bestehen oder den unteren Teil der Brüstung 12 bilden, die nach außen hin durch eine Isolierwand gedämmt ist.

In der Verteilerkammer 46 verteilt sich die Luft gemäß Fig. 2c über die Breite des Fensters und tritt über Öffnungsschlitze 32, gegebenenfalls zusätzlich durch ein Filterelement 34 im waagerechten unteren Fensterrahmenprofil 26 in den Glaskanal 38 ein. Die Luft verläßt den Glaskanal 38 über senkrechte Austrittsschlitze 36 im oberen waagerechten Fensterprofil 28 und tritt in eine Sammelkammer 44 ein, die beispielsweise im Bereich der abgehängten Decke 18 angeordnet und nach außen durch einen Abschnitt der Fassade 20 gedämmt ist. Der in Fig. 2a und 2b gezeigte Luftaustritt entspricht der Leitung 8 in Fig. 1.

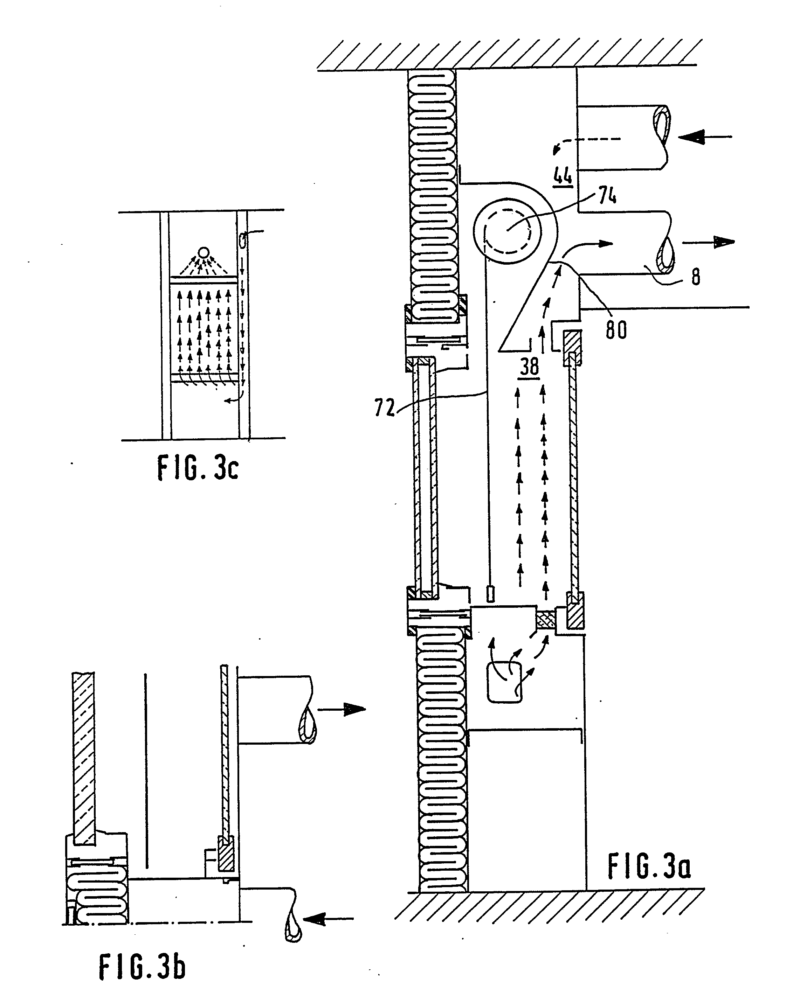

Die Ausführungsform gemäß Fig. 3a bis 3c unterscheidet sich von derjenigen in Fig. 2a bis 2c nur durch ein in der Tiefe größeres Fenster, in dessen Glaskanal 38 ein Rollstore oder ein Sonnenrollo 72 eingeführt werden kann. Der Rollstore 72 ist auf einer oberen Wickelwelle 74 aufgewickelt, die innerhalb der oberen Verteilerkammer 44 so gekapselt ist, daß der abgedichtete Austrittsschlitz des Rollstores seitlich neben den oberen Luftaustrittsschlitzen 36 im Fensterrahmen angeordnet ist. Der Rollstore kann bis zur Unterseite des Glaskanala 38 heruntergezogen werden und wirkt dabei gleichzeitig zur Verkleinerung des Glaskanals. Man erkennt, daß die oben aus dem Glaskanal herausgeführte Luft, bevor sie über die Leitung 8 abgeführt wird, an dem Gehäuse 80 der gekapselten Wickelwelle vorbeistreicht.

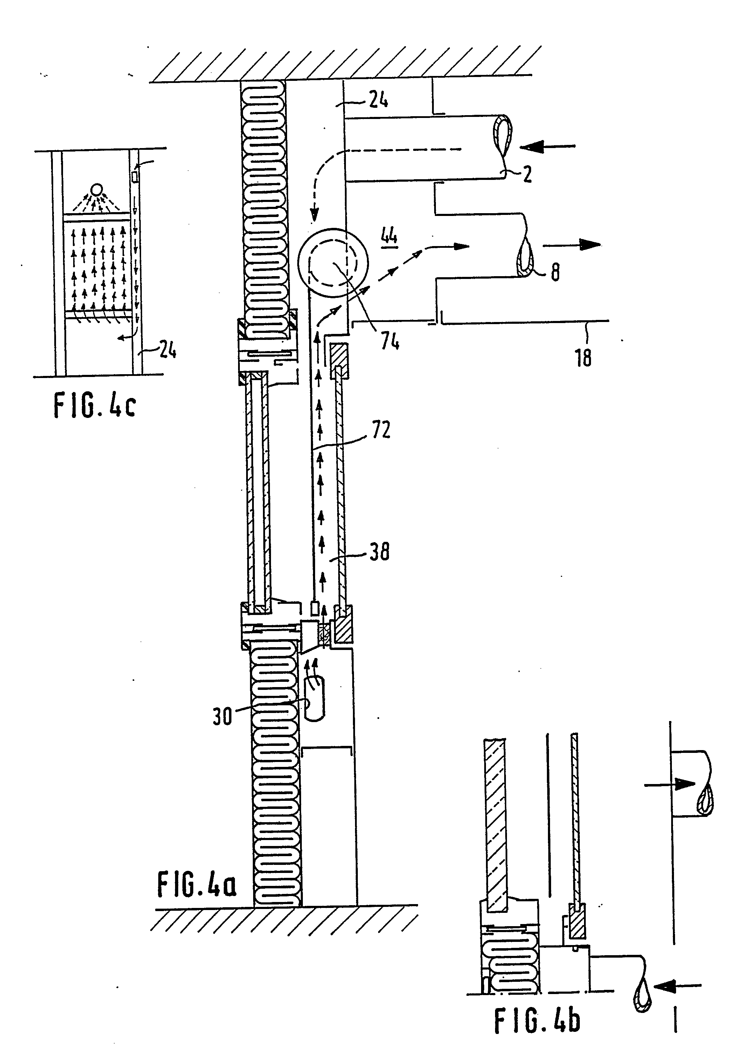

Beim Ausführungsbeispiel gemäß Fig. 4a bis 4c ist ähnlich wie in Fig. 2 ein schmaleres Fenster vorgesehen, das hier jedoch ebenfalls mit einem absenkbaren Rollstore 72 ausgestattet ist. Die Wickelwelle 74 des Rollstores befindet sich ungekapselt in der oberen Sammelkammer 44, die in diesem Beispiel vorsorglich ein größeres Volumen besitzt als die Tiefe des senkrechten Hohlprofilpfostens 22 bzw. 24, in den die Strömungsleitung 2 oben einmündet.

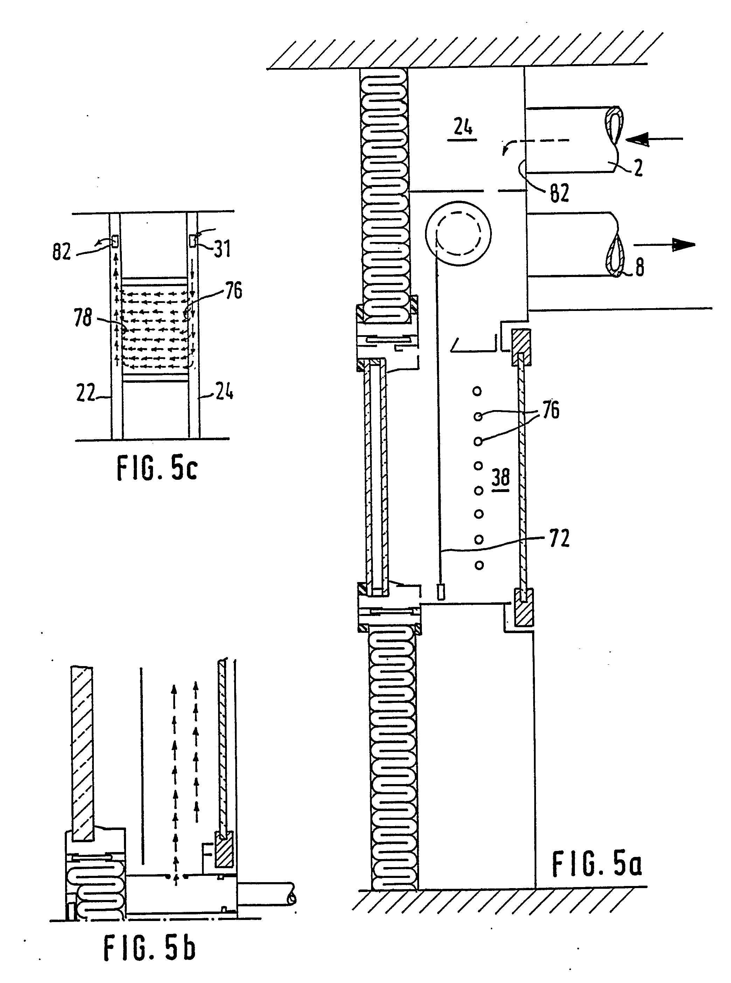

Die in Fig. 5a bis 5c gezeigte Ausführungsform ist ein Beispiel für eine waagerechte Durchführung der Luft durch den Glaskanal 38. Luft aus der Strömungsleitung 2 wird wie bei den anderen Ausführungsbeispielen oben in den senkrechten Hohlprofil-Fensterpfosten 24 eingeführt. Dieser besitzt allerdings seitliche Austrittsöffnungen oder -schlitze 76 im Bereich des Glaskanals 38, so daß entsprechend Fig. 5c die Luft im allgemeinen waagerecht durch den Glaskanal hindurchströmt. Der senkrechte Hohlprofilpfosten 22 an der gegenüberliegenden Seite enthält Aufnahmeöffnungen oder -schlitze 78, so daß dieser Hohlprofilpfosten 22 als Sammelleitung für die Abluft aus dem Fenster dient, die am oberen Ende über eine Austrittsöffnung 82 an die Strömungsleitung 8 angeschlossen ist, um im Sommerbetrieb im geschlossenen Kreislauf durch das Kühlgerät zurückgekühlt werden oder im Abluftfensterbetrieb dem zentralen Abluftkanalsystem 64 zugeleitet zu werden.

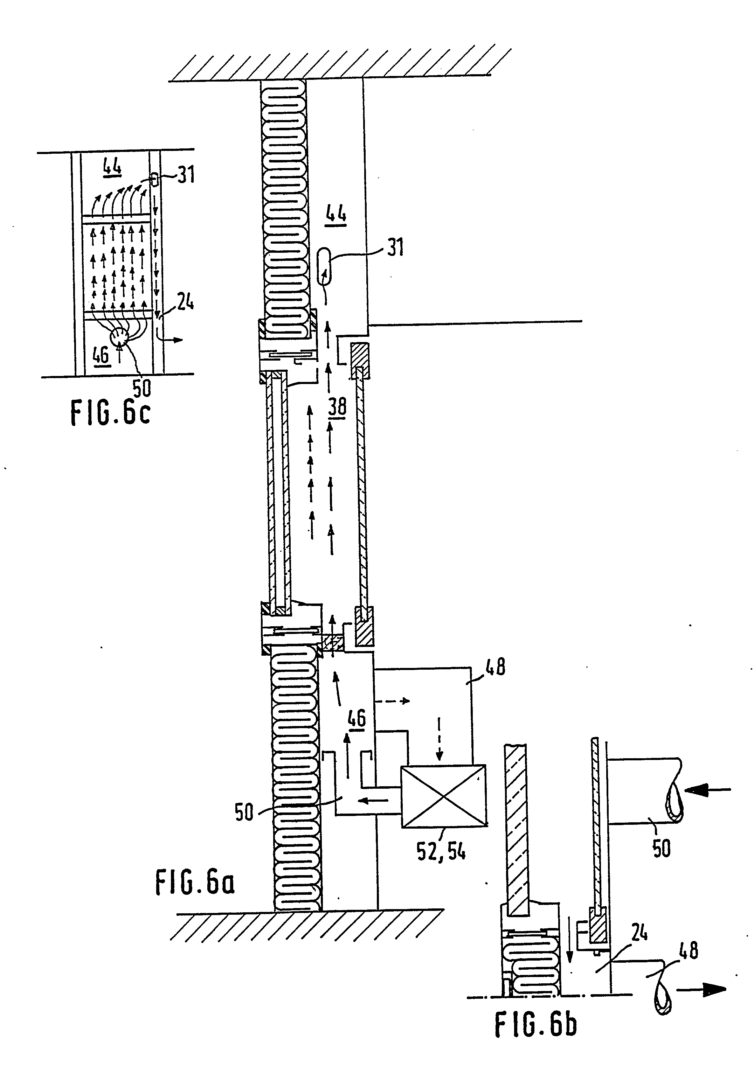

Beim luftführenden Fenster des Ausführungsbeispiels gemäß Fig. 6a bis 6c erfolgt die Luftführung, wie in den meisten anderen Fällen, in der bevorzugten Richtung von unten nach oben durch den Glaskanal 38 an der Innenscheibe 42 entlang, und zwar ausgehend von einer unteren Verteilerkammer 46, die unterhalb der Lufteintrittsschlitze 32 im unteren Fensterrahmenprofil angeordnet ist, bis in eine obere Sammelkammer 44 oberhalb der Austrittsschlitze 36 im oberen waagerechten Fensterrahmenprofil.

Im vorliegenden Fall befinden sich jedoch wesentliche Komponenten des gesonderten Kreislaufes im Bereich der Brüstung, wie diese in Fig. 6a schematisch dargestellt ist.

Die aus dem Fenster kommende Abluft strömt durch den senkrechten Hohlprofilpfosten 24 nach unten seitlich am Fenster vorbei und wird dort von einer Saugleitung 48 aufgenommen, die zu dem als Einheit mit dem Ventilator 54 dargestellten Kühlgerät führt. Von dort führt eine Druckleitung 50 in die Verteilerkammer 46. Die nicht gezeigten Anschlüsse an eine Ansaugleitung 56 für den Betrieb des Fensters als Abluftfenster und auch die Leitungen und Anschlüsse zu einem Klima- oder Abluftsystem können ähnlich wie in Fig. 1 im Bereich der abgehängten Decke vorgesehen sein, gegebenenfalls auch im Bereich einer Doppelbodenkonstruktion. Im Fall eines vollständig unabhängigen Kreislaufs kann die Abluft und auch Außenluft über nichtgezeigte Anschlüsse geführt werden, die im Bereich der Brüstung oder der oberen Fassade unmittelbar nach außen führen.

## Ansprüche

1. Luftführendes Fenster oder Fassadenabschnitt mit einem zwischen einer Außenscheibe (40) und einer Innenscheibe (42) gebildeten Glaskanal (38), der seitlich durch vorzugsweise als Hohlprofil ausgeführte Rahmenteile begrenzt und durch zum 'Glaskanal (38) hin gerichtete Öffnungen (32, 36) von Rahmenteilen mit in ein Luftführungssystem einbezogen ist,

**dadurch gekennzeichnet,**

daß das Luftführungssystem für jedes einzelne Fenster oder jeden Fassadenabschnitt einen gesonderten Kreislauf aufweist, der in einer Richtung durch den Glaskanal (38) und in der entgegenkommenden Richtung durch wenigstens einen senkrechten Hohlprofilpfosten oder -holm (22) verläuft und der wenigstens einen Ventilator (54) sowie ein vorzugsweise regelbares Kleinkühlgerät (52) enthält und normalerweise in sich geschlossen ist,

und daß ein an den Kreislauf anschließbarer, mit dem Raum (10) in Verbindung stehender steuerbarer Ansaugkanal (56) vorgesehen ist, über dem im Heizfall oder Winderbetrieb warem Raumluft in den Kreislauf gelangt, die nach Durchströmen des Glaskanals (38) über eine gemeinsam mit dem Ansaugkanal (56) öffnende Verbindung (70) zu einem zentralen Abluftkanalsystem weggeführt wird.

2. Luftführendes Fenster nach Anspruch 1, dadurch gekennzeichnet, daß der mit Absaugöffnungen z. B. in der Raumdecke verbundene Ansaugkanal (56) und die zum zentralen Abluftsystem (64) führende Verbindung (70) durch Ventile, insbesondere Klappventile (66,68) gemeinsam gesteuert sind.

3. Luftführendes Fenster nach Anspruch 1, dadurch gekennzeichnet, daß die Zufuhr von Raumluft in den Kreislauf über den Ansaugkanal (56) mit Hilfe eines Thermostatventils so gesteuert ist, daß eine Differenz vom im allgemeinen 30° C zwischen Raumtemperatur und Temperatur an der Innenscheibe (42) des Glaskanals nicht unterschritten wird.

4. Luftführendes Fenster nach einem der vorhergehenden Ansprüche, dadurch gekennzeichnet, daß oberhalb und unterhalb des Glaskanals (38) eine Luftverteilerkammer (46) bzw. eine Luftsammelkammer für aus dem Glaskanal (38) austretende Luft vorgesehen ist, und daß die beiden Kammern (44,46) entweder direkt oder über als Hohlprofile ausgeführte senkrechte Pfosten oder Holme (22 bzw. 24), die gleichzeitig seitliche Begrenzungen des Fensters oder Fassadenabschnittes bilden, in den geschlossenen Kreislauf mit einbezogen sind.

5. Luftführendes Fenster nach einem der vorhergehenden Ansprüche, dadurch gekennzeichnet, daß die aus Querholmen, Riegeln oder Zargen bestehenden waagerechten Fensterprofile (26,28) im allgemeinen senkrechte Luftschlitze (32 bzw. 36) enthalten, die einerseits mit dem Glaskanal (38) und andererseits mit einer Verteilerkammer (46) bzw. einer Sammelkammer (44) in Verbindung stehen, welche in Höhe einer abgehängten Decke (18) oder einer Brüstung (17) oberhalb bzw. unterhalb des Fensters angeordnet sind.

6. Luftführendes Fenster nach einem der vorhergehenden Ansprüche, dadurch gekennzeichnet, daß bei im Glaskanal (38) bevorzugter Luftführung von unten nach oben die Verteilerkammer (46) unterhalb und die Sammelkammer (44) oberhalb des Fensters angeordnet ist,
und daß zum Anschluß der Verteilerkammer (46) wenigstens ein als Hohlprofil ausgeführter senkrechter Fensterholm (24) vorgesehen ist, der bei innerhalb einer abgehängten Decke angeordnetem Ventilator und Kühlgerät (52,54) eine obere an den Kreislauf angeschlossene Lufteintrittsöffnung (31) und eine untere in die Verteilerkammer (46) mündende Luftaustrittsöffnung (30) aufweist (Fig. 2).

7. Luftführendes Fenster nach einem der vorhergehenden Ansprüche 1 bis 5, dadurch gekennzeichnet, daß bei im Glaskanal (38) bevorzugter Luftführung von unten nach oben die Verteilerkammer (46) unterhalb und die Sammelkammer (44) oberhalb des Fensters angeordnet ist,
und daß zum Lufttransport von oben nach unten wenigstens ein senkrechter Fensterholm (24) vorgesehen ist, der bei im Bereich der Brüstung (12) angeordnetem Ventilator und Kühlgerät (52,54) eine obere mit der Sammelkammer (44) in Verbindung stehende Lufteintrittsöffnung (31) und eine untere an eine Saugleitung des Kreislaufes angeschlossene Luftaustrittsöffnung (30) aufweist, während die untere Verteilerkammer (46) mit einer Druckleitung (50) des Kreislaufs verbunden ist (Fig. 6).

8. Luftführendes Fenster nach einem der vorhergehenden Ansrpüche, dadurch gekennzeichnet, daß in den oder vor den zum Glaskanal (38) führenden Lufteintrittsschlitzen (32) des waagerechten Fensterrahmenprofils ein oder mehrere Luftfilter (34) angeordnet sind.

9. Luftführendes Fenster nach einem der vorhergehenden Ansprüche, dadurch gekennzeichnet, daß die Strömungsgeschwindigkeit im Glaskanal (38) bei Bedarf durch einen, den Glaskanal verengenden absenkbaren Rollstore oder dergleichen Sonnenschutzeinrichtung (72) erhöht wird.

10. Luftführendes Fenster nach einem der vorhergehenden Ansprüche 7 bis 9, dadurch gekennzeichnet, daß der Ventilator (54) und das Kühlgerät (52) im Bereich der Brüstung (12) unterhalb des Fensters angeordnet und in den geschlossenen Kreislauf zwischen der unteren Verteilerkammer (46) und einer Austrittsöffnung wenigstens eines als Hohlprfil ausgeführten senkrechten Fensterholms (24) angeschlossen sind, über den die Luft aus dem oberen Sammelraum (44) seitlich am Fenster vorbei nach unten strömt (Fig. 6).

11. Luftführendes Fenster nach Anspruch 1, dadurch gekennzeichnet, daß von den den Glaskanal (38) an beiden Seiten abschließenden senkrechten Hohlprofilpfosten (22,24) der eine eine an die Druckseite des Kreislaufs angeschlossene Lufteintrittsöffnung (31) sowie in den Glaskanal (38) mündende Austrittsschlitze (76) aufweist, während der andere senkrechte Hohlprofilpfosten dem Glaskanal zugekehrte Eintrittsschlitze (78) und eine Luftaus trittsöffnung (30) zur Rückführung der den Glaskanal im allgemeinen waagerecht durchströmenden Luft in den Kreislauf enthält (Fig. 5).

12. Luftführendes Fenster nach einem der vorhergehenden Ansprüche, dadurch gekennzeichnet, daß die senkrechten Hohlprofilpfosten (22,24) in der Funktion als Verteilerkammer bzw. als Sammelkammer einen in der Fenstertiefe vergrößerten Querschnitt aufweisen, der im Bereich des Glaskanals (38) durch einen Rollstore (72) reduzierbar ist.

13. Luftführendes Fenster nach einem der vorhergehenden Ansprüche, dadurch gekennzeichnet, daß zur Vermeidung von Tauwasserbildung an der Innenseite der insbesondere aus Isolierglas bestehenden Außenscheibe (40) des Glaskanals (38) das Kühlgerät abschaltbar ist und die im Kreislauf befindliche Luft unkonditioniert umgewälzt wird.

14. Luftführendes Fenster nach einem der vorhergehenden Ansprüche, dadurch gekennzeichnet, daß ein bei Bedarf einschaltbares Heizregister im Kreislauf vorgesehen ist, um die in der Anlage befindliche umgewälzte Luft zu erwärmen.

15. Luftführendes Fenster nach einem der vorhergehenden Ansprüche, dadurch gekennzeichnet, daß der an den Kreislauf angeschlossene Ansaugka-- nal (56) über eine oder mehrere Abluftleuchten (58) geführt ist, die zur Erwärmung der durch den Glaskanal (30) geführten Luft beitragen.

16. Luftführendes Fenster nach einem der vorhergehenden Ansprüche, dadurch gekennzeichnet, daß im Kreislauf Einrichtungen zur Luftmengenänderung vorgesehen sind, z. B. ein regelbarer Ventilator, oder ein Regelventil in der Ansaugleitung (56), um insbesondere im Winterbetrieb die abgesaugte Raumluftmenge zu reduzieren.

17. Luftführendes Fenster nach einem der vorhergehenden Ansprüche, dadurch gekennzeichnet, daß innerhalb des Glaskanals zwischen Außenscheibe und Innenscheibe eine zusätzliche Verglasung fest abgebracht ist, die mit der Innenscheibe einen Zwangsführungskanal für die Kühlluft bildet, dem gesonderte untere Einlaß- und obere Auslaßöffnungen im Fensterelement zugeordnet sind, und daß die Einlaßöffnungen an der Unterseite des Glaskanals und des Zwangsführungskanals durch Absperrmittel wahlweise derart steuerbar sind, daß im Kühlfensterbetrieb Kühlluft in den Zwangsführungskanal gelangt und im Abluftfensterbetrieb Raumluft durch den im allgemeinen breiteren Glaskanal geführt wird.

18. Luftführendes Fenster nach Anspruch 17, dadurch gekennzeichnet, daß oberhalb oder unterhalb der Einlaßöffnungen im Fensterelement als Absperrmittel ein Schieber waagerecht geführt ist, um die eine oder andere Öffnung wahlweise zu verschließen.

19. Luftführendes Fenster nach Anspruch 17, dadurch gekennzeichnet, daß eine unterhalb der Einlaßöffnungen sich etwa über die Fensterbreite erstreckende Verteilerkammer (46) durch eine längsgerichtete Trennwand in zwei mit den beiden verschiedenen Einlaßöffnungen in Verbindung stehenden Teilkammern unterteilt ist, und daß die Beaufschlagung der Teilkammern mit Kühlluft oder Abluft durch an Öffnungen im Bereich der Stirnseite der Teilkammern wirksamen Schieber- oder Absperrklappenmitteln gesteuert wird.

FIG.1

EP 0 358 121 A2

FIG. 2c

FIG. 2a

FIG. 2b

FIG. 3c

FIG.3b

FIG.3a

EP 0 358 121 A2

FIG.4c

FIG.4a

FIG.4b

FIG. 5c

FIG. 5b

FIG. 5a

FIG.6c

FIG.6a

FIG.6b